Europäisches Patentamt

European Patent Office

Office européen des brevets

(19)

(11) Publication number: **0 278 141**
**B1**

# (12) EUROPEAN PATENT SPECIFICATION

(45) Date of publication of the patent specification:
12.09.90

(51) Int. Cl.⁵: **B60B 33/00**

(21) Application number: 87301261.1

(22) Date of filing: 13.02.87

(54) Wheel assembly and method and apparatus for making same.

(43) Date of publication of application:
17.08.88 Bulletin 88/33

(45) Publication of the grant of the patent:
12.09.90 Bulletin 90/37

(84) Designated Contracting States:
CH DE FR GB IT LI SE

(56) References cited:
FR-A- 2 534 191
US-A- 2 100 542
US-A- 2 261 465
US-A- 4 666 215

(73) Proprietor: MINER ENTERPRISES INC, 1200 East State Street, Geneva Ililnois 60134(US)

(72) Inventor: Toms, Robert S., Jr., 3S651 Burk Road, Warrenville Illinois 60555(US)

(74) Representative: Lerwill, John et al, A.A. Thornton & Co. Northumberland House 303-306 High Holborn, London, WC1V 7LE(GB)

ACTORUM AG

## Description

This invention generally relates to assemblies of the type comprising a bearing hub and an annular tread of elastomeric material.

Non-inflatable roller elements or wheel assemblies conventionally are fabricated with some sort of bearing hub about which is positioned and/or bonded a tread layer of more resilient material than the bearing hub. Examples of various applications for such wheel assemblies include high performance tires for fork trucks, dollies, street sweepers and other heavy load tires, as well as drum and cylinder rollers, conveyor rollers or the like. Such wheel assemblies must withstand a wide variety of loads, temperatures, chemicals and surface conditions.

Heretofore, the most common wheel assemblies for such usages have been made with a tread layer of rubber or polyurethane. Unfortunately, such materials do not provide sufficient resistance to abrasion, cuts and/or cut propagation. Such materials also have high failure rates due to hysteretic heating which softens the material, releases the bond between the material and the bearing hub, and simply breaks down the material. Such materials also lack sufficient contact and impact load capacity. In fact, when using fork lift trucks in high activity installations, where the wheel or tire tread layer is fabricated of polyurethane material, the wheel assemblies may have to be replaced as often as every other day.

An example of such a wheel assembly is described in US Patent No. 2 100 542 and comprises a bearing hub with an annular tread of soft rubber or like elastomeric material which in the course of assembly with the hub is strongly compressed axially and held in that condition by the hub. The tread is also slightly expanded radially. However, the tread is deformed hydrostatically, so that the outer annular portion of the tread is expanded substantially compared with its initial shape.

The present invention is characterized in that the tread material is a thermoplastic elastomeric material capable of retaining a substantial degree of compression having been compressed radially in one direction at least 30% of its initial thickness, while being contained in the opposite radial direction.

The invention also includes a method and apparatus for the assembly of such wheels.

The present invention makes it possible to produce a wheel assembly in which the tread has a greater material memory compared with rubber and polyurethane, low hysteretic heating, very high contact and impact load capacity and excellent resistance to cutting and abrasion.

The thermoplastic elastomeric material is preferably a copolyester polymer elastomer material as disclosed in U.S. Patent No. 4 198 037 to Anderson, dated April 15, 1980 and assigned to the present Applicants, for use as a novel elastomeric spring. As disclosed therein, one such polymer, sold under the trademark HYTREL, is made from three basic ingredients, namely (1) dimethyl terephthalate, (2) polyglycols such as polytetramethylene ether glycol, polyethylene ether glycol or polypropylene ether glycol, and (3) short chain diols like butanediol and ethylene glycol.

Such copolyester polymers act suitably when employed as tension springs. However, they had proven to be quite unsuitable for use as a compressive spring material. This is due to the fact that when compressed over about ten percent they commence taking on a permanent set. Obviously, a resilient material that permanently deforms under load is quite unsuitable for the intended purposes.

However, the patent described above discloses a method by which a thermoplastic elastomeric material, such as the copolyester polymer elastomer material, can be treated for rendering the material useable as a resilient material, particularly a compression spring. Generally, that treatment, to convert the elastomer into a resilient or compression spring material, comprises the application of a compressive force to a body or thickness of the material which compresses the body or thickness to an extent equal to at least thirty percent of its previous free thickness, measured in the direction of the applied pressure.

The invention, together with its objects and the advantages thereof, may be best understood by reference to the following description taken in conjunction with the accompanying drawings, in which reference numerals identify like elements in the figures and in which:

FIGURE 1 is a perspective view of a wheel assembly fabricated according to the invention;

FIGURE 2 is a central, axial section taken generally along line 2-2 of Figure 1;

FIGURE 3 is an exploded, axial section through the elements of the wheel assembly, in conjunction with certain components of the apparatus for radially compressing the tread layer;

FIGURE 4 is a view similar to that of Figure 3, but illustrating the compressing cone about to be moved axially into the tread layer; and

FIGURE 5 is a view similar to that of Figure 4, but with the apparatus having compressed the tread layer and fully inserted the bearing hub.

Detailed Description Of The Preferred Embodiment

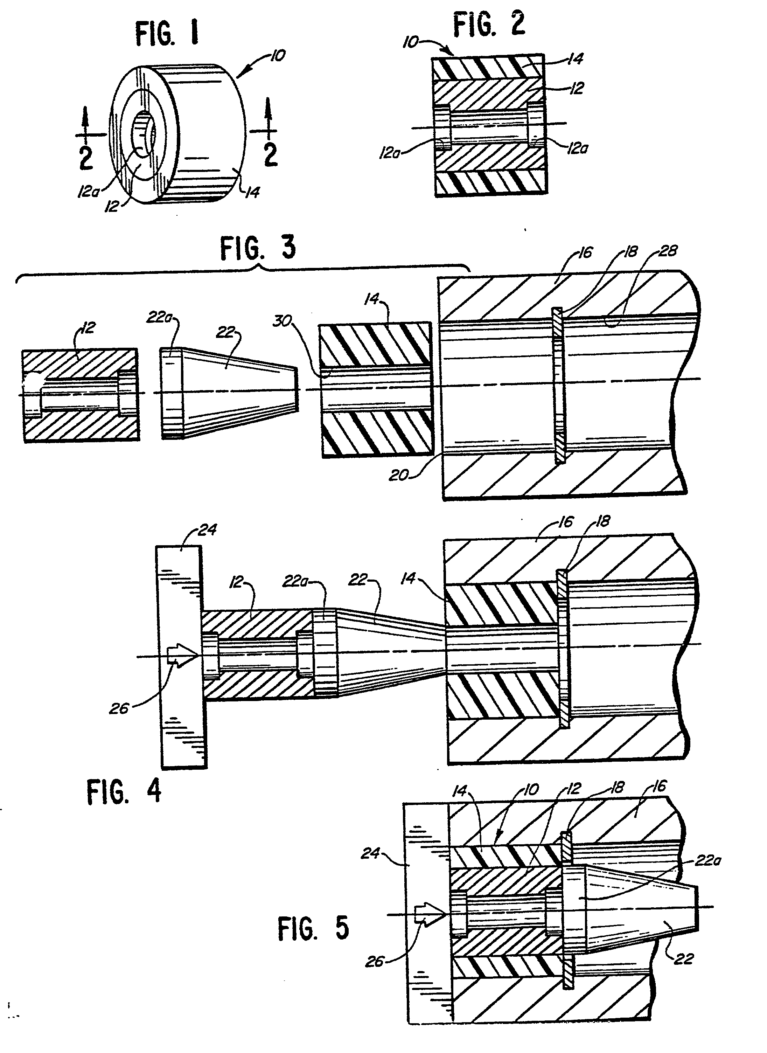

Referring to the drawings in greater detail, and first to Figures 1 and 2, a wheel assembly fabricated according to the concepts of this invention is generally designated 10. The wheel assembly includes an annular bearing hub 12 having end bearing races 12a. An annular tread layer 14 is positioned about bearing hub 12. Preferably, the outer surface of bearing hub 12 is cylindrical, and tread layer 14 is of generally uniform thickness axially of the wheel assembly.

Tread layer 14 is fabricated of a thermoplastic elastomeric material. This material is of the type sold by E.I. DuPont de Nemours & Co. of Wilmington, Delaware, under the trademark HYTREL. As explained above, this material comprises a copolyester polymer elastomer. The material is such that upon being compressed at least thirty percent of an initial free thickness, the material will retain a substantial portion of the thickness reduction after being compressed. This compression converts the material from one having inherent physical properties that make it unsuitable for use as a resilient material, such as a compression spring, to a permanently compressed body which is rendered usable as a compression spring or other application requiring a degree of resiliency, as disclosed herein.

Referring to Figure 3, tread layer 14 is shown in its "free" state. In other words, the tread layer has an initial free radial thickness before the material is compressed to permanently retain its reduced thickness.

Figures 3-5 illustrate sequential steps in fabricating wheel assembly 10 in accordance with the method and apparatus of the invention. More particularly, the condition of tread layer 14 in its "free" state in Figures 3 and 4, and in its permanently compressed state in Figure 5 should be noted. The positioning of bearing hub 12 in the three figures also should be noted.

The apparatus for carrying out the fabrication method of the invention generally includes radial containment means in the form of a tubular or cylindrical member 16. Containment tube 16 can be fabricated of a heavy wall steel construction. The containment tube is provided for confining radial expansion of tread layer 14. An abutment stop in the form of a ring 18 is provided within containment tube 16, a distance inwardly from an entrance opening 20 of the containment tube substantially equal to the length of tread layer 14.

Radial expansion means in the form of a frusto-conical member 22 is provided for applying a radially outward force from within tread layer 14 sufficient to compress the tread layer at least 30 percent of its initial free radial thickness, while the tread layer is confined by containment tube 16. A loading plate 24 is provided for applying an axial load in the direction of arrows 26 (Figs. 4 and 5). It should be understood that loading plate 24 is simply shown somewhat schematic and represents a component of a press machine.

In fabricating wheel assembly 10 utilizing the apparatus described above, tread layer 14 first is aligned with cylindrical bore 28 on the inside of containment tube 16, as illustrated in Figure 3. Of course, the diameter of bore 28 should be the same as the outside diameter of tread layer 14, or very slightly less to allow the tread layer to slide into containment tube 16 into abutment with stop 18. Expansion cone 22 then is positioned for insertion into an axial bore 30 formed in tread layer 14 in its free state as shown in Figures 3 and 4. The smaller end of the expansion cone may be dimensioned slightly smaller than bore 30 to provide a pilot means for inserting the expansion cone into the tread layer.

Bearing hub 12 is positioned on the outside, or against the large end, of expansion cone 22, and loading plate 24 is positioned against the opposite end of the bearing hub as illustrated in Figure 2. As shown, tread layer 14 still is in its initial free state, and bearing hub 12 is sandwiched between expansion cone 22 and loading plate 24. Although not shown in the drawings, for piloting purposes, the enlarged end of expansion cone 22 and the inner side face of loading plate 24 could be provided with bosses complementary in shape with bearing races 12a of bearing hub 12 so that tread layer 14, expansion cone 22, bearing hub 12 and loading plate 24 all are positioned in axial coalignment as shown in Figure 4.

A force then is applied in the direction of arrows 26 by an appropriate press machine. In a single stroke, expansion cone 22 will move into and through tread layer 14 while, at the same time, bearing hub 12 will be forced immediately behind the expansion cone into a position as shown in Figure 5, properly positioned within tread layer 14 to form the finished wheel assembly 10. It can be seen that the outer or trailing end of expansion cone 22 has an annular, flat land 22a of a diameter complementary to the outside diameter of bearing hub 12.

It also is contemplated that a tread pattern could be provided about the surface of internal cylindrical bore 28 of containment tube 16 for forming a tread about the outside of tread layer 14. This would be appropriate for vehicular tires, for instance with fork lift trucks or the like.

From the foregoing it will be understood that expansion cone 22 converts axial force into a radial expansion force which is effective to compress tread layer 14. The diameter of land 22a of expansion cone 22 should be such that the tread layer is compressed in a range of about 30-70% of its initial free radial thickness (i.e. the free state shown in Figs. 3 and 4). Since the tread layer is fabricated of thermoplastic elastomeric material, such as copolyester polymer elastomer material, the material will retain a substantial portion of the thickness reduction after being removed from containment tube 16. A very slight expansion is experienced when the compressive forces are removed from such material, and this slight expansion is effective to provide a tight press-fit of tread layer 14 onto bearing hub 12. Of course, if an additional bonding medium is desired, that medium could be applied to the outside cylindrical surface of bearing hub 12 prior to its being moved axially into the compressed tread layer. In addition, although a substantial force is used to compress the tread layer, abutment stop 18 need not be of substantial construction since, from the moment of initial radial expansion, considerable friction is created between the outside diameter of tread layer 14 and the inside surface of bore 28 through containment tube 16.

An actual wheel assembly fabricated according to the invention described above has proven to possess greater material memory, lower hysteretic heating, higher contact and impact load capacity and more resistance to abrasion and/or cut propagation than wheel assemblies, rolling elements or tires heretofore produced with such materials as polyurethane or the like. A wheel was fabricated with a material having a 55 durometer on the "D" scale, which was selected for its stiffness and durability when used as a rolling tire for a fork lift truck, for instance. Of course, other durometer material can be used, depending on the requirements. Although the tread layer will retain a substantial portion of the thickness reduction after being compressed within a range of 30-70%, very effective wheel assemblies have been produced with a compression on the order of 40-45%. Such material could even be compressed in the range of 90-95%. However, this is not generally very practical because of the exhorbitant amount of compressive forces required. By compressing the tread layer by 30-70%, the result is a permanent material set in the tread layer of the wheel assembly and provides for greater material properties than any wheel assembly heretofore available.

## Claims

1. A wheel assembly comprising a bearing hub (12) and an annular tread (14) of elastomeric material mounted on the hub (12), the said material having a permanent degree of partial compression, characterized in that the said material is a thermoplastic elastomeric material capable of retaining a substantial degree of compression having been compressed radially in one direction at least 30% of its initial thickness, while being contained in the opposite radial direction.

2. The wheel assembly of claim, wherein said material is a copolyester polymer elastomer material.

3. The wheel assembly of claims 1 or 2 wherein said material has a durometer hardness of approximately 55 on the D scale.

4. The wheel assembly of claims 1, 2 or 3 wherein / said bearing hub (12) is annular and said tread (14) is of generally uniform thickness.

5. The wheel assembly of any of claims 1 to 4, wherein said tread (14) has a tread pattern about the periphery thereof.

6. A method of making a wheel assembly comprising a bearing hub and an annular tread of elastomeric material, comprising the steps of effecting partial compression of the tread and mounting the tread over the hub characterized in that the tread which is composed of a thermoplastic elastomeric material, is radially compressed in one radial direction while being contained in the opposite radial direction, to reduce its thickness by at least 30%, preferably 30% to 70%, the material being inherently capable of retaining substantially all of the applied compression.

7. A method as claimed in claim 6, wherein said material is provided of copolyester polymer elastomer material.

8. A method according to claim 6 or 7, including the step of providing a tread pattern about the periphery of the tread.

9. A method according to claim 6, 7 or 8 wherein the bearing hub is positioned within the annular tread after the tread has been radially compressed.

10. A method according to any one of claims 6 to 9, wherein said radial force is applied from within the annular tread while the outer periphery of the tread is radially contained.

11. A method according to claim 10, wherein radial compression of the tread is carried out by axially inserting a cone shaped wedge member (22) into the annular tread while outer periphery of the tread is radially contained.

12. A method according to claim 11, wherein said bearing hub is inserted axially into the annular tread immediately behind the cone shaped wedge member.

13. Apparatus for carrying out the method of claim 6, comprising:
radial containment means (16) for positioning about the outer periphery of the tread; and
radial expansion means (22) for applying a radially outward force from within the tread sufficient to compress the tread at least thirty percent of its initial radial thickness.

14. Apparatus according to claim 13, wherein said radial expansion means comprises a cone-shaped wedge member (22) movable axially into the tread.

15. Apparatus according to claim 13 or 14, including means for moving the bearing hub means axially into the annular tread layer immediately behind the cone-shaped wedge member.

16. Apparatus according to claim 13, 14 or 15, wherein the said containment means (22) comprises a tubular member.

17. Apparatus according to claim 13, including means for positioning the bearing hub means into the tread after the tread is compressed.

## Revendications

1. Ensemble roue comprenant un moyeu de portée (12) et un bandage annulaire (14) en matière élastomère monté sur le moyeu (12), ladite matière possédant un degré permanent de compression partielle, caractérisé en ce que ladite matière est une matière élastomère thermoplastique capable de conserver un degré notable de compression après avoir été comprimée radialement dans un sens, d'au moins 30% de son épaisseur initiale, tout en restant contenue dans le sens radial opposé.

2. Ensemble roue selon la revendication 1, dans lequel ladite matière est une matière élastomère polymère copolyester.

3. Ensemble roue selon la revendication 1 ou 2, dans lequel ladite matière possède une dureté d'environ 55 sur l'échelle D.

4. Ensemble roue selon la revendication 1, 2 ou 3, dans lequel ledit moyeu de portée (12) est annulaire et ledit bandage (14) est d'une épaisseur sensiblement uniforme.

5. Ensemble roue selon une quelconque des revendications 1 à 4, dans lequel ledit bandage (14) présente un dessin de bande de bande de roulement sur sa périphérie.

6. Procédé de fabrication d'un ensemble roue comprenant un moyeu de portée et un bandage annulaire en matière élastomère, qui comprend les phases consistant à effectuer une compression partielle du bandage et à monter le bandage sur le moyeu, caractérisé en ce que le bandage qui est composé d'une matière élastomère thermoplastique est comprimé radialement dans un sens radial en même temps qu'il est contenu dans le sens radial opposé pour réduire son épaisseur d'au moins 30%, de préférence de 30 à 70%, la matière intrinsèquement capable de conserver sensiblement la totalité de la compression appliquée.

7. Procédé sleon la revendication 6, dans lequel ladite matière est composée d'une matière élastomère polymère copolyester.

8. Procédé selon la revendication 6 ou 7, comprenant la phase consistant à former un dessin de bande de roulement sur la périphérie du bandage.

9. Procédé selon la revendication 6, 7 ou 8, dans lequel le moyeu de portée est positionné dans le bandage annulaire après que le bandage a été comprimé radialement.

10. Procédé selon une quelconque des revendications 6 à 9, dans lequel ladite force radiale est appliquée de l'intérieur du bandage annulaire pendant que la périphérie extérieure du bandage est contenue radialement.

11. Procédé selon la revendication 10, dans lequel la compression radiale du bandage est excutée en insérant axialement un coin (22) de forme conique dans le bandage annulaire pendant que la périphérie extérieure du bandage est contenue radialement.

12. Procédé selon la revendication 11, dans lequel ledit moyeu de portée axialement est inséré dans le bandage annulaire immédiatement à la suite du coin de forme conique.

13. Appareil pour la mise en œuvre du procédé selon la revendication 6, comprenant:
des moyens de contention radiale (16) destinés à être positionnés autour de la périphérie extérieure du bandage; et
des moyens de dilatation radiale (22) destinés à appliquer une force radialement vers l'extérieur à partir de l'intérieur du bandage, d'une valeur suffisante pour comprimer le bandage d'au moins trente pourcent de son épaisseur radiale initiale.

14. Appareil selon la revendication 13, dans lequel lesdits moyens de dilatation radiale comprennent un coin (22) de forme conique que l'on peut faire avancer axialement pour l'introduire dans le bandage.

15. Appareil selon la revendication 13 ou 14, comprenant des moyens servant à faire avancer axialement les moyens formant moyeu de portée pour les introduire dans la couche de roulement annulaire immédiatement à la suite du coin de forme conique.

16. Appareil selon la revendication 13, 14 ou 15, dans lequel lesdits moyens de contention (22) comprennent un élément tubulaire.

17. Appareil selon la revendication 13, comprenant des moyens servant à positionner les moyens formant moyeu de portée dans le bandage après que le bandage a été comprimé.

**Patentansprüche**

1. Radzusammenstellung umfassend eine Lagernabe (12) und einen ringförmigen Laufkranz (14) aus Elastomermaterial angebracht auf der Nabe, wobei das Material einen permanenten Grad an partieller Kompression besitzt, dadurch gekennzeichnet, daß das Material ein thermoplastisches Elastomermaterial ist, das fähig ist, einen beträchtlichen Grad an Kompression, nach dem es in einer Richtung radial um wenigstens 30% seiner ursprünglichen Dicke komprimiert worden ist, beizubehalten, während es in der entgegengesetzten radialen Richtung aufgenommen wird.

2. Radzusammenstellung nach Anspruch 1, dadurch gekennzeichnet, daß das Material ein Copolyesterpolymer-Elastomermaterial ist.

3. Radzusammenstellung nach Anspruch 1 oder 2, dadurch gekennzeichnet, daß das Material eine Härtemesser-Härte von ungefähr 55 auf der D-Skala hat.

4. Radzusammenstellung nach einem der Ansprüche 1 bis 3, dadurch gekennzeichnet, daß die Lagernabe (12) ringförmig ist und der Lagerkranz allgemein gleichmäßiger Dicke ist.

5. Radzusammenstellung nach einem der Ansprüche 1 bis 4, dadurch gekennzeichnet, daß der Laufkranz ein Laufkranzmuster um die Außenfläche davon herum besitzt.

6. Verfahren zur Herstellung einer Radzusammenstellung umfassend eine Lagernabe und einen ringförmigen Laufkranz aus Elastomermaterial, umfassend die Schritte, Bewirken einer partiellen Kompressoin des Laufkranzes und Anbringen des Laufkranzes über der Nabe, dadurch gekennzeichnet, daß der Laufkranz, der aus thermoplastischem Elastomermaterial besteht, in einer radialen Richtung radial komprimiert wird während er in der entgegengesetzten radialen Richtung aufgenommen wird, um seine Dicke um mindestens 30%, vorzugsweise um 30 bis 70%, zu verringern, wobei das Material von Natur aus in der Lage ist, im wesentlichen die ganze auferlegte Kompression beizubehalten.

7. Verfahren nach Anspruch 6, dadurch gekennzeichnet, daß das Material aus Copolyesterpolymer-Elastomermaterial beschaffen ist.

8. Verfahren nach Anspruch 6 oder 7, dadurch gekennzeichnet, daß es den Schritt des Ausstattens mit einem Laufkranzmuster um die Außenfläche des Laufkranzes herum enthält.

9. Verfahren nach einem der Ansprüche 6 bis 8, dadurch gekennzeichnet, daß die Lagernabe innerhalb des ringförmigen Laufkranzes angebracht wird, nachdem der Laufkranz radial komprimiert worden ist.

10. Verfahren nach einem der Ansprüche 6 bis 9, dadurch gekennzeichnet, daß die Radialkraft vom Inneren des Laufkranzes her angewendet wird, während die Außenfläche des Laufkranzes radial aufgenommen wird.

11. Verfahren nach Anspruch 10, dadurch gekennzeichnet, daß die radiale Kompression des Laufkranzes durch axiales Einführen eines konusförmigen Keilelements (22) in den ringförmigen Laufkranz ausgeführt wird, während die Außenfläche des Laufkranzes radial aufgenommen wird.

12. Verfahren nach Anspruch 11, dadurch gekennzeichnet, daß die Lagernabe axial unmittelbar hinter das konusförmige Keilelement in den ringförmigen Lagerkranz eingeführt wird.

13. Vorrichtung zum Ausführen des Verfahrens nach Anspruch 6, umfassend:
radiale Aufnahmeeinrichtung (16) zum Anbringen um die äußere Außenfläche des Lagerkranzes herum; und

Radialausdehungsmittel (22) zum Anwenden einer radial auswärts gerichteten Kraft von innerhalb des Laufkranzes, die ausreicht den Laufkranz um mindestens 30% seiner ursprünglichen radialen Dicke zu komprimieren.

14. Vorrichtung nach Anspruch 13, dadurch gekennzeichnet, daß das Radialausdehnungsmittel ein in den Laufkranz axial bewegliches, konusförmiges Keilelement (22) umfaßt.

15. Vorrichtung nach Anspruch 13 oder 14, dadurch gekennzeichnet, daß sie Mittel enthält, um die Lagernabeneinrichtung axial in die ringförmige Laufkranzschicht unmittelbar hinter das konusförmige Keilelement zu bewegen.

16. Vorrichtung nach einem der Ansprüche 13 bis 15, dadurch gekennzeichnet, daß die Aufnahmeeinrichtung (22) ein röhrenförmiges Element umfaßt.

17. Vorrichtung anch Anspruch 13, dadurch gekennzeichnet, daß sie Mittel enthält, um die Lagernabeneinrichtung in dem Laufkranz anzubringen, nachdem der Laufkranz komprimiert ist.

EP 0 278 141 B1

**FIG. 1**

**FIG. 2**

**FIG. 3**

**FIG. 4**

**FIG. 5**